# EUROPÄISCHE PATENTSCHRIFT

(11) **EP 0 758 937 B1**
(45) Veröffentlichungstag und Bekanntmachung des Hinweises auf die Patenterteilung: **04.12.2002**
(21) Anmeldenummer: 95917970.6
(22) Anmeldetag: 26.04.1995
(51) Int. Cl.: B23K 1/00

(54) **VERFAHREN ZUM BELOTEN VON METALLISCHEN STRUKTUREN MIT EINEM UNTERSCHIEDLICHE ZUSTÄNDE AUFWEISENDEN HAFTMATERIAL**
PROCESS FOR SOLDERING METAL STRUCTURES WITH A BONDING MATERIAL COMPRISING DIFFERENT STATES
PROCEDE DE BRASAGE DE STRUCTURES METALLIQUES AVEC UN MATERIAU COLLANT PRESENTANT DIFFERENTS ETATS

(30) Priorität: 10.05.1994 DE 4416539
(43) Veröffentlichungstag der Anmeldung: 26.02.1997
(73) Patentinhaber: Emitec Gesellschaft für Emissionstechnologie mbH, 53797 Lohmar (DE)
(72) Erfinder: MAUS, Wolfgang, D-51429 Bergisch Gladbach (DE); WIERES, Ludwig, D-51491 Overath (DE)
(74) Vertreter: Kahlhöfer, Hermann, Dipl.-Phys.
(86) Internationale Anmeldenummer: EP9501591
(87) Internationale Veröffentlichungsnummer: WO95030508

(56) Entgegenhaltungen:
- EP-A- 0 474 909
- WO-A-94/06594
- US-A- 4 477 527

## Beschreibung

Die Erfindung bezieht sich auf ein Verfahren zum Beloten von metallischen Strukturen gemäß dem Oberbegriff des Anspruchs 1.

Das Beloten von metallischen Strukturen, wie z. B. metallischen Katalysator-Trägern für Abgaskatalysatoren, ist ein Kernproblem der Effektivität des Fertigungsprozesses für derartige Katalysator-Träger bzw. der späteren Festigkeit und Haltbarkeit des Trägers selbst.

Es ist bekannt, beim Beloten einen Kleber oder Binder auf die zu verbindenden metallischen Strukturen aufzubringen, wobei das Lotmaterial pulverförmig ist und entweder schon vorher mit dem Kleber oder Binder gemischt, oder später auf diesen aufgebracht wird.

In der DE-OS-29 24 592 ist ein Verfahren zum Herstellen einer Trägermatrix für einen katalytischen Reaktor zur Abgasreinigung bei Brennkraftmaschinen von Kraftfahrzeugen beschrieben. Bei diesen Verfahren sollen die aus gewellten und glatten Stahlblechlagen punktuell oder insgesamt untereinander verlötet werden, was durch Aufbringen eines Lotauftrages auf den Stahlblechen, insbesondere in Streifen z. B. in Richtung der Wellen der gewellten Stahlbleche oder senkrecht dazu, erfolgt. Durch anschließenden Aufheizen der Matrix erfolgt eine Verlötung aller Lagen untereinander. Dabei wird flüssige Lotpaste oder pulverförmiges Lot mit einem Binder aufgetragen. Das Auftragen des Lotmittels bzw. des Binders erfolgt durch verschiedene Verfahren wie z. B. Tauchen, Einpressen, Einspritzen in die Stirnflächen des Wabenkörpers usw. Um ein gleichmäßiges Verlöten an allen Kontaktstellen zwischen den Stahlblechlagen zu gewährleisten wird in aller Regel mit einem Überschuß an Lot bzw. Bindemittel gearbeitet.

In der EP-0 049 489 B1 ist ein Verfahren zur Herstellung einer Trägermatrix für einen Abgaskatalysator beschrieben. Bei diesem Verfahren werden die mit einem Lötauftrag zu versehenden glatten und gewellten Bleche, die zu einer Trägermatrix für einen Abgaskatalysator gewickelt werden, zunächst mit einem Haftkleber beschichtet, der bei der Löttemperatur rückstandsfrei verdampft und auf dessen Oberfläche nach dem Trocknen eine monopartikulare Schicht trockenen Lötpulvers aufgebracht wird. Mit diesem aufgebrachten Lötpulver werden die Stahlbleche anschließend gewickelt und miteinander verlötet. Nachteilig kann kierbei sein, daß die Lotkörner zwischen den zu verbindenden Blechlagen liegen, so daß beim Aufschmelzen der Lotkörner ein unerwünschter Spalt entstehen kann, was die Lötergebnisse beeinträchtigt.

In der WO 93/25339 sind weiterhin ein Verfahren und eine Vorrichtung zum Beloten eines metallischen Wabenkörpers beschrieben. Bei diesem Verfahren wird zunächst, falls vom Herstellungsprozeß auf den Flächen kein Walzöl vorhanden ist, eine dünne Walzölschicht aufgetragen, die anschließend thermisch behandelt wird zum Entfernen leicht flüchtiger Bestandteile. Die Bereiche der Blechlagen, die mit Lot versehen werden sollen, werden mit einer wässrigen Lösung eines Tensides in Kontakt gebracht, wodurch sich eine vorübergehend als Adhäsionsvermittler für Lotpulver wirkende Schicht bildet. Danach werden die Bleche zu Wabenkörpern gewickelt oder geschichtet. Diesem Schritt schließt sich das in Inkontaktbringen der Wabenkörper mit Lotpulver an. Das Lotpulver bleibt an Stellen haften, wo Walzölreste und Tensid zusammengekommen sind, zwar wird durch dieses Verfahren eine sparsame Verwendung von Lot erreicht, jedoch muß das anhaftende Lot zur Verhinderung des späteren Herausrieselns bei Transportvorgängen noch mit einem Kleber oder Binder in einem zusätzlichen' Arbeitsschritt fixiert werden.

Aus der WO 89/11938 ist ein Verfahren zum Beleimen und Beloten eines metallischen Katalysator-Trägerkörpers und eine zugehörige Vorrichtung beschrieben. Bei diesem. Verfahren werden die Bleche vor dem Wickeln oder Schichten in den zu verlötenden Bereichen mit einem Kleber oder Binder, insbesondere einem Haftkleber, beschichtet. Anschließend werden die Bleche zu einem Wabenkörper gewickelt oder geschichtet und erst dann wird der Körper mit Lotpulver beaufschlagt. Beim Weitertransport der Bleche nach dem Beschichten mit Kleber und beim Wickeln oder Schichten des. Katalysator-Trägerkörpers, d. h. bei allen zwischen den jeweiligen Verfahrensabschnitten vorzusehenden Handhabungs- oder Transportschritten, muß der Kleber in einem klebrigen bis flüssigen Zustand gehalten werden, wodurch ein Weglaufen bzw. Herauslaufen des Klebers aus dem Katalysator-Trägerkörper auftreten kann oder zumindest die mit dem Kleber in Berührung kommenden Maschinenteile verschmutzt und letztlich fehleranfällig werden.

Es ist deshalb ausgehend von der WO 89/11938 ein Ziel der Erfindung, ein Haftmaterial zum Festhalten von Lotpulver an zu verlötenden Bereichen der miteinander zu verbindenden metallischen Strukturen zu verwenden, dessen Haftfähigkeit während des Herstellungsprozesses beeinflußbar ist, so daß das Festhalten von Lotpulver beeinflußbar ist, welches außerdem ein Verunreinigen, Blockieren von Maschinen/Maschinenteilen vermeidet und welches von seinem Auftragsort nicht unbeabsichtigt zwischen den einzelnen Verfahrensschritten wegfließen kann.

Dieses Ziel wird mit einem Verfahren mit den Merkmalen nach Anspruch 1 erreicht.

Zweckmäßige Weiterbildungen sind in den abhängigen Ansprüchen definiert.

Danach umfaßt das Verfahren zum Beloten von metallischen Strukturen, das vorzugsweise für Wabenkörper für Abgaskatalysatoren Anwendung findet, das Aufbringen eines als Kleber, Binder oder Adhäsionsvermittler wirkenden Haftmaterials und eines pulverförmigen Lotes, das durch das Haftmaterial an der metallischen Struktur festgehalten wird. Gemäß der Erfindung wird ein Haftmaterial zum Festhalten des Lotpulvers verwendet, daß nach dem Auftragen vorübergehend nicht oder nur wenig haftfähig, aber zeitweise als Haftmaterial aktivierbar ist, insbesondere während des Herstellungsprozesses der metallischen Struktur, d. h. während der verschiedenen für den Herstellungsprozeß erforderlichen Verfahrensschritte mindestens zwei in Bezug auf seine Hartwirkung unterschiedliche Zustände annehmen kann. Ein Zustand ist ein weniger haftfähiger und der zweite Zustand ein stärker hartfähiger Zustand, wobei die Zustände des Haftmaterials in Abhängigkeit von äußeren Bedingungen, z. B. der Temperatur, geändert werden können, insbesondere reversibel. Es kann auch ein solches Haftmaterial verwendet werden, daß seine (reversibel) ineinander umwandelbaren Zustände durch Lichteinfluß, UV-Einfluß, einen sonstigen Strahlungseinfluß, eine chemischen Einwirkung oder andere äußere Einflüsse realisiert.

Vorzugsweise weist das Haftmaterial in einem ersten Ausführungsbeispiel zwei Aggregatzustände auf, nämlich einen festen und einen flüssigen, wobei sich der feste Zustand des Haftmaterials in seinen flüssigen Zustand oder umgekehrt innerhalb eines während des Herstellungsprozesses auftretenden zulässigen Temperaturbereiches umwandeln kann. Als ein besonders bevorzugtes Haftmaterial kann Wachs eingesetzt werden, welches bei Normaltemperatur von etwa 0°C bis 50°C fest und bei höheren Temperaturen flüssig ist. Ein ebenfalls sehr bevorzugtes Ausführungsbeispiel verwendet als Haftmaterial einen Heißkleber, welcher bei Temperaturen unter seiner Schmelztemperatur, d. h. z. B. etwa 200°C keine oder nur sehr geringe Hafteigenschaften an seiner Oberfläche hat, über seiner Schmelztemperatur jedoch eine starke Haftfähigkeit entfaltet.

Grundsätzlich läßt sich das erfindungsgemäße Haftmaterial vorteilhaft bei allen bekannten Belotungsverfahren einsetzen, bei denen bisher Kleber, Binder, Haftkleber oder Adhäsionsvermittler verwendet wurden. So kann das Haftmaterial vor, bei oder nach dem Wickeln oder Schichten eines Wabenkörpers aufgebracht werden, und zwar durch Tauchen, Sprühen, Auftragen, Einwickeln von Haftmaterialfolie usw.

Besonders vorteilhaft ist dieses seine Zustände ändernde Haftmaterial bei einem Verfahren gemäß der WO 93/25339 anwendbar. Dabei werden die Metallblechlagen, die durch den Walzvorgang in der Regel mit einem Walzöl versehen sind, durch Aufheizen thermisch entfettet, um weitgehend fettfreie Oberflächen zu erhalten. Die Entfernung zumindest leicht flüchtiger Fette von den Oberflächen ist bei manchen Haftmaterialien günstig, damit das Haftmaterial auf die noch heißen Metallblechlagen aufgebracht werden kann, ohne daß die Gefahr besteht, daß sich das Haftmaterial mit der Oberfläche der Metallblechlagen nicht ausreichend verbindet. Das Haftmaterial wird an vorgesehenen Bereichen aufgetragen.

Je nach Anwendungsfall und geforderter Festigkeit können die Auftragungsbereiche des Haftmaterials kleiner bzw. größer und/oder kontinuierlich bzw. diskontinuierlich sein. Das kann vorzugsweise mittels eines Stiftes aus im festen Zustand befindlichen Haftmaterial erfolgen. Das Haftmaterial wird bei Berührung mit dem heißen Metallblech flussig und bildet einen flüssigen Auftrag. Bei manchen Verfahrensabläufen kann es erforderlich sein, daß die Blechlagen vor dem Wickeln oder Schichten gesondert abgekühlt werden, was eine Umwandlung des flüssigen Haftkleberauftrags in einen weniger haftfähigen Zustand zur Folge hat. Der Verfahrensablauf kann jedoch vorzugsweise auch so gestaltet sein, daß in den nachfolgenden Handhabungs- bzw. Transportschritten vor dem Wikkeln oder Schichten die Temperaturabsenkung ausreichend ist, so daß das Haftmaterial weniger haftfähig, insbesondere fest wird. Das hat den Vorteil, daß das Haftmaterial bei späteren Bearbeitungsschritten vom Ort des Auftrages nicht mehr weglaufen kann und nicht die Gefahr des Verschmutzens bzw. Blockierens von Maschinen oder Maschinenstationen die Folge ist. In dem abgekühlten, weniger haftfähigen Zustand werden die mit dem Haftmaterial versehenen Blechlagen dann gewickelt, verschlungen oder in Schichten zu einem Wabenkörper gefertigt. Dabei ruhen oder gleiten die Kontaktbereiche zwischen den strukturierten Blechlagen mit der Haftmaterialschicht dazwischen aneinander, ohne miteinander zu verkleben. Wird nun anschließend ein Wiederaufheizen des Wabenkörpers bis zu einer Temperatur vorgenommen, bei der das Haftmittel wieder stärker haftfähig, insbesondere flüssig ist, so wird sich das Haftmittel insbesondere in den Spalten in der Nähe der zu verlötenden Bereiche ansammeln. Bei diesem stärker haftfähigen Zustand des Haftmittels wird der Wabenkörper oder Teilbereiche davon mit Lotpulver beaufschlagt, welches an den mit Haftmittel versehenen Stellen ohne Schwierigkeiten haften bleibt. Je stärker der Einfluß der äußeren Bedingungen, vorzugsweise je höher die Temperatur ist, der das Haftmittel ausgesetzt ist, desto haftfähiger wird das Haftmittel. Damit ist es mit dem Verfahren gemäß der Erfindung sogar möglich, die Menge des vom Haftmittel aufgenommen Lotpulvers in bestimmten Grenzen zu steuern, je nach gewünschter Festigkeit, sowie auch die räumliche Verteilung des Lotpulvers an den tatsächlich: zu verlötenden Stellen zu beeinflussen, insbesondere in den Zwickelbereichen anzusammeln.

Für manche Haftmittel, insbesondere Heißkleber, besteht auch die Möglichkeit, diese auf eine noch vorhandenen Walzölschicht aufzutragen und eine genügende Haftung an den Blechen zu erreichen. Dann kann das Walzöl noch zur Erleichterung nachfolgender Schritte des Wickelns oder Schichtens genutzt werden. Erst der fertige Wabenkörper wird dann thermisch entfettet, wobei der Kleber zurückbleibt und in seinem dann flüssigen Zustand bei einem noch bei erhöhter Temperatur nachfolgenden Beloten Lotpulver aufnimmt. Diese Vorgehensweise ist energetisch günstiger als ein thermisches Entfetten vor dem Schichten oder Wickeln des Wabenkörpers und eventuell kann ein nachfolgendes Löten mit noch warmen Wabenkörpern begonnen werden, wobei nochmals Energie gespart wird.

Das Haftmaterial wird bevorzugt in seinem stärker haftfähigen, insbesondere flüssigen Zustand an den gewünschten Stellen der Metallblechlagen in ansich bekannter Weise aufgetragen. Vorzugsweise werden die Metallblechlagen gewickelt, verschlungen oder geschichtet, während sich das Haftmaterial in einem weniger haftfähigen, insbesondere festen Zustand befindet.

Ein besonders bevorzugtes Anwendungsbeispiel des erfindungsgemäßen Verfahrens ist das Verfahren zur Herstellung von aus strukturierten Metaublechlagen gewickelten, verschlungenen oder geschichteten Wabenkörpern, insbesondere für Abgaskatalysatoren von Kraftfahrzeugen, und noch spezieller für nahe am Motor angeordnete Katalysatoren, die für die Schadstoffreduzierung beim Kaltstart benötigt werden und die eine besonders hohe Lötfestigkeit aufweisen müssen. Zum Aufbringen des Lotpulvers auf das Haftmaterial wird dieses zunächst in seinen haftfähigen, insbesondere flüssigen Zustand versetzt, und der Wabenkörper kann dann vollständig oder in gewünschten Teilbereichen mit Lotpulver in Kontakt gebracht werden, daß dann an dem sich im wesentlichen im flüssigen Zustand befindlichen Haftmaterial an den beaufschlagten Stellen haften bleibt.

Wird in einem weiteren bevorzugten Ausführungsbeispiel das Haftmaterial so ausgewählt, daß es in seinem stärker hartfähigen insbesondere flüssigen bzw. pastösen Zustand eine so hohe Viskosität und Adhäsion zu den Metallstrukturen aufweist, daß es sich besonders in den zu verlötenden Spalten und Zwickeln an den Berührungsstellen der Metaüstrukturen ansammelt, kann gerade dort das für den Lötvorgang erforderliche Lötpulver gebunden werden, ohne daß unnötig viel Lotpulver verbraucht wird. Insgesamt wird erreicht, daß nicht nur über die Auswahl des Haftmaterials, sondern auch über die gezielte Beeinflussung der äußeren Bedingungen beim Beaufschlagen mit Lot eine optimale Anpassung an gewünschte Verbindungseigenschaften beim Herstellen eines gelöteten metallischen Wabenkörpers möglich ist.

Eine besondere Variante des Verfahrens besteht darin, einen mit Haftmaterial versehenen Wabenkörper mit heißem Lotpulver zu Beaufschlagen, welches das Haftmaterial, dort wo Lotkörner auftreffen, kurzzeitig in seinen haftfähigeren Zustand versetzt und dann haften bleibt. Eine Aufheizung des ganzen Wabenkörpers ist dann nicht erforderlich.

Es ist auch möglich, ein Haftmaterial zu verwenden, welches in einem ersten, z. B. chemisch gelösten, Zustand aufgetragen wird. Anschließend geht es in einen zweiten, nicht oder nur wenig haftfähigen Zustand über, bis der Wabenkörper fertig gewickelt, geschlungen oder geschichtet ist. Danach wird das Haftmaterial in seinen haftfähigeren Zustand versetzt, was durch Temperatureinfluß oder andere äußere Maßnahmen, z.B. auch durch Einwirkung von Dampf, erfolgt.

Das eigentliche Lötverfahren nach einem gemäß der Erfindung vorbereiteten Wabenkörper kann ein Löten in einem Lötofen, vorzugsweise ein Hochtemperatur-Vakuumlöten umfassen, bei dem das Haftmaterial durch Einwirkung von Vakuum und/oder Temperatur im wesentlichen rückstandsfrei verdampft. Eventuelle Rückstände, z. B. geringe Mengen Kohlenstoff o. ä., beeinflussen das Lötergebnis nicht negativ.

Weitere Vorteile, Merkmale und Anwendungsmöglichkeiten der Erfindung werden nachfolgend unter Bezug auf die Zeichnung anhand von Ausfübrungsbeispielen im Hinblick auf das Auftragen des Haftmaterials zur Realisierung des erfindungsgemäßen Verfahrens beschrieben.
- Fig. 1: zeigt ein flächenmäßiges Aufbringen von Haftmaterial auf beide Seiten einer Folie;
- Fig. 2: zeigt ein streifenförmiges Aufbringen von Haftmaterial;
- Fig. 3: zeigt ein örtlich begrenztes Aufbringen von Haftmaterial auf den Wellenbergen einer gewellten Folie;
- Fig. 4: zeigt eine über die gesamte Länge des Wellenberges (Breitenrichtung der gewellten Folie) aufgetragene Haftmaterialschicht;
- Fig. 5: zeigt weitere Möglichkeiten des Anfbringens einer Haftmaterialschicht; und
- Fig. 6: zeigt eine als Band auf das Wellband aufgebrachte Haftmaterialschicht.

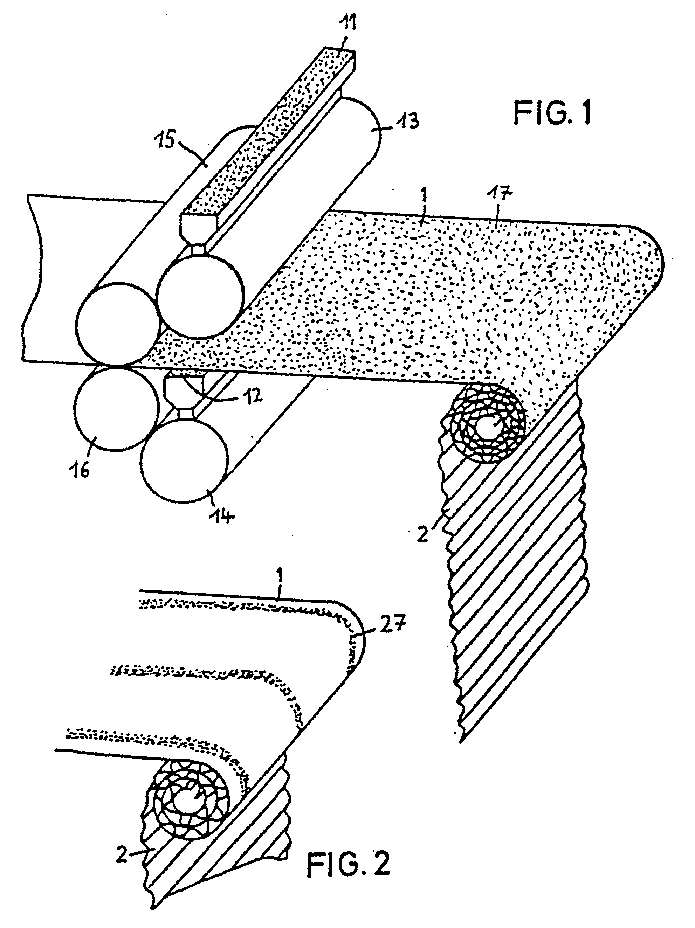

Figur 1 zeigt schematisch eine Auftragsvorrichtung, mit der Materialien wie Wachs oder ein Heißkleber 11, 12 beidseitig auf ein Wachsblech 1 aufgetragen werden können, bevor das glatte Blech 1 mit einem gewellten Blech 2 zusammengewickelt wird. Das Haumaterial 11, 12 gelangt aus einem Vorratsbehälter auf Transportwalzen 13 bzw. 14 und wird von dort an Auftragswalzen 15 bzw. 16 weitergegeben, welche einen gleichmäßigen Auftrag auf dem Blech 1 bewirken. Zum Auftragen sollten sich dabei alle Teile der Auftragsstation auf einer Temperatur befinden, bei dem das Haftmaterial klebrig oder flüssig ist. Das glatte Blech 1 kann dabei kalt oder warm sein.

Figur 2 zeigt schematisch, daß der Auftrag von Haftmaterial auch in Streifen 27 auf dem glatten Blech 1 erfolgen kann.

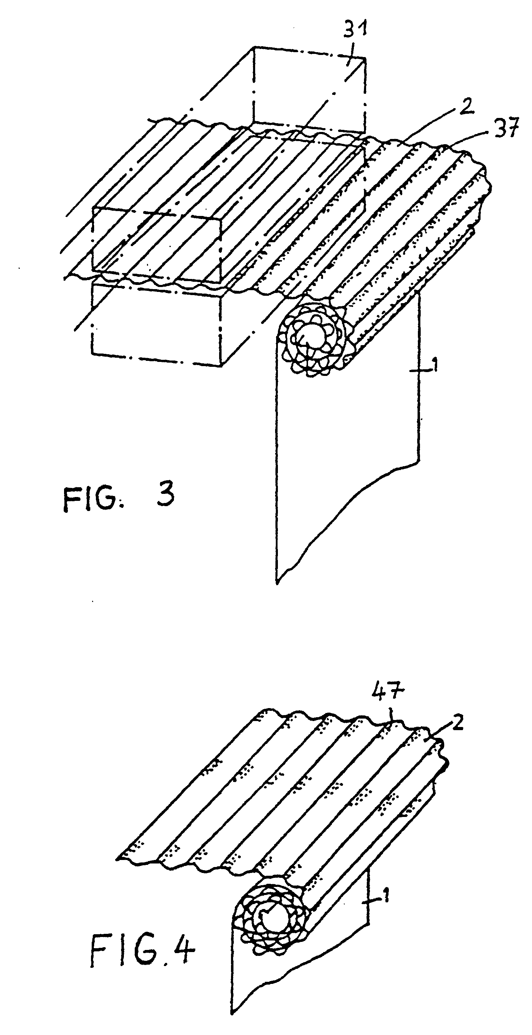

Figur 3 illustriert die Möglichkeit, das Haftmaterial nicht auf das glatte Blech 1, sondern auf ein strukturiertes Blech 2 aufzutragen, und dabei vorzugsweise nur auf die Wellenkämme auf beiden Seiten. Dabei kann das Haftmaterial beispielsweise von einem festen Block 31, der gegen das strukturierte Blech 2 gedrückt wird, abgetragen werden, vorzugsweise dadurch, daß das Blech 2 eine höhere Temperatur aufweist als der Block 31.

Figur 4 illustriert wiederum, daß auch auf dem strukturierten Blech 2 Haftmaterial in Streifen 47 aufgetragen werden kann, beispielsweise dadurch, daß das gewellte Blech 2 zwischen mehreren Blöcken oder Stiften aus Haftmaterial schleifend entlangläuft, vorzugsweise bei erhöhter Temperatur des gewellten Bleches.

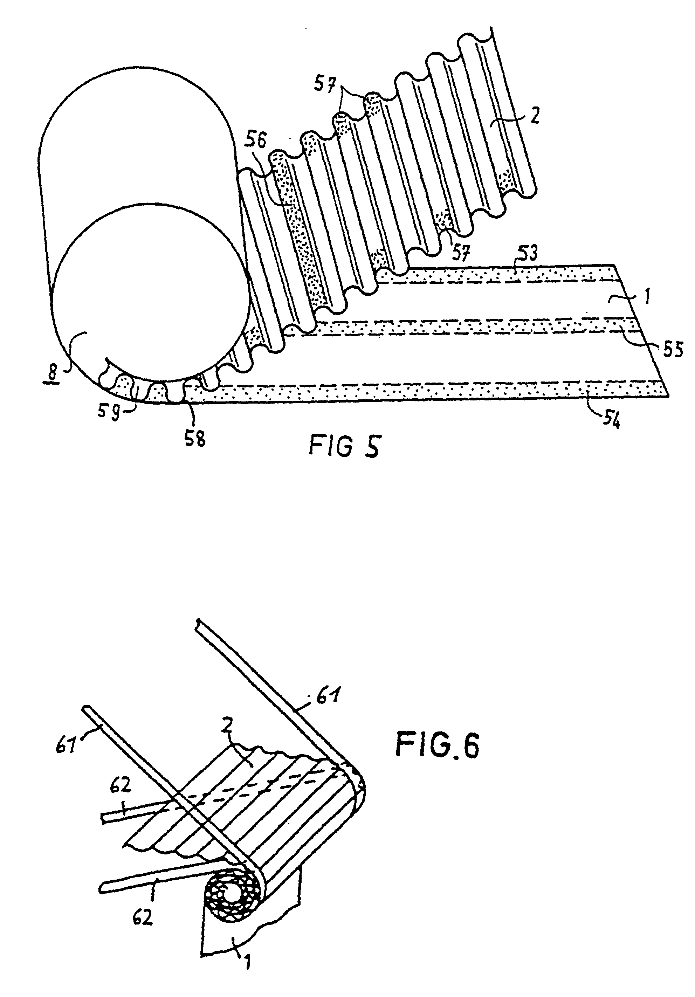

Figur 5 zeigt einen Überblick über verschiedene Möglichkeiten zum Auftragen von Haftmaterial auf ein glattes 1 und/oder ein strukturiertes Blech 2. Der Auftrag kann in Streifen 53, 54, 55 auf dem glatten Blech 1 erfolgen und/oder an ausgewählten Stellen 57 auf den Kuppen eines strukturierten Bleches 2 oder auch über die gesamte Länge von Wellenbergen 56 eines strukturierten Bleches 2. Die mit Haftmaterial beschichteten Bleche 1, 2 können dann zu einem Wabenkörper 8 gewickelt oder geschichtet werden, wobei die Strukturen dann zu für ein Abgas durchlässigen Kanälen 59 rühren. Natürlich können, wie bevor beschrieben, Bleche auch beidseitig mit Haftmaterial beschichtet werden.

Eine weitere Möglichkeit der Aufbringung von Haftmaterial ist in Figur 6 illustriert, welche zeigt, wie zwischen glatte 1 und gewellte 2 Bleche ein Haftmaterial in Streifenform eingewickelt wird. Diese Art der Aufbringung von Haftmaterial muß natürlich bei niedriger Temperatur bzw. unter den Bedingungen erfolgen, unter denen das Haftmaterial weniger haftfähig und nicht flüssig ist.

Es sei darauf hingewiesen, daß die Erfindung nicht auf die gezeigten Ausführungsbeispiele beschränkt ist. Insbesondere können die zu belotenden Wabenkörper auch aus andersartig strukturierten Blechlagen bestehen, wobei nicht unbedingt glatte Zwischenlagen verwendet werden müssen. Außer spiralig gewickelten Wabenkörpem kommen auch sogenannte S-förmig verschlungene, solche mit evolventenförmigen Blechlagen und geschichtete Wabenkörper in Betracht. Auch in der Wahl der zu belotenden Bereiche besteht eine größtmögliche Freiheit, so daß in unterschiedlichen Bereichen des Wabenkörpers unterschiedliche Zonen belotet werden können. So können beispielsweise die Stirnseiten, scheibenförmige Abschnitte des Wabenkörpers oder hohlzylindrische Bereiche mit Haftmaterial versehen und später belotet werden.

Es sei auch darauf hingewiesen, daß natürlich auch die Möglichkeit besteht, daß Lotpulver noch vor dem Wickeln auf die mit Haftmaterial beschichteten Bereiche aufzubringen, unter Umständen sogar bereits gleichzeitig mit dem Haftmaterial. Auch hier kommen verschiedene Vorteile des erfindungsgemäßen Haftmaterials zur Wirkung, insbesondere die Möglichkeit, durch späteres Umwandeln des Haftmaterials in einen haftfähigen Zustand eine verstärkte Ansammlung von Lot nahe den Berührungsstellen der Bleche zu bewirken.

Die Art und Weise und Parameter des Aufbringens des Lotes sind vor allem in der DE-OS-29 24 592 bzw. der WO 89/11938 beschrieben und sollen deshalb hier nicht weiter ausgeführt werden. Eine weitere Möglichkeit des Aufbringens des pulverförmigen Lotes ist z. B. mittels eines Wirbelbettes gegeben.

### BEZUGSZEICHENLISTE

- 1: glattes Zwischenband
- 2: Wellband
- 4: Mantel
- 5: Haftmaterialbereich
- 6: Haftmaterialbereich
- 7: Haftmaterialbereich
- 8: gelöteter Bereich
- 13: Trägermatrix (zylindrischer Wabenkörper)
- 31: Speicher für Lötpulver
- 32': Benetzungswalzen
- 32": Benetzungswalzen
- 33: Speicher für Lötpulver
- 34': Benetzungswalzen
- 34": Benetzungswalzen
- 35: Lotschicht auf Haftmaterialschicht
- 36': Lotstreifen auf Haftkleberstreifen
- 36": Lotstreifen auf Haftkleberstreifen
- 41: Verteilervorrichtung für Haftmaterial und pulverförmiges Lot
- 42': Haftmaterialbänder
- 42": Haftmaterialbänder
- 43': Stirnflächen der Trägermatrix
- 43": Stirnflächen der Trägermatrix
- 44: Tauchbad
- 45': Benetzte Zonen
- 45": Benetzte Zonen
- 46: Lotpulverspeicher
- 47: Sieb
- 48: Trockenkammer
- 49: Vakuum- bzw. Schutzgaskammer mit Aufheizvorrichtung 50

## Patentansprüche

1. Verfahren zum Beloten von metallischen Strukturen (1, 2), insbesondere Wabenkörpern (8) für Abgaskatalysatoren, wobei das Lot als Pulver aufgebracht und durch ein als Kleber, Binder oder Adhäsionsvermittler wirkendes Haftmaterial an der metallischen Struktur festgehalten wird,
**dadurch gekennzeichnet,**
**daß** zum Festhalten des Lotpulvers ein Haftmaterial (11, 12, 17; 27; 31, 37; 47; 53, 54, 55, 56, 57; 61, 62 ) aufgetragen wird, welches dann während eines Teils des Herstellungsprozesses der metallischen Strukturen keine oder nur eine geringe Haftfähigkeit hat, danach zeitweise aber als Haftmaterial aktiviert werden kann.

2. Verfahren nach Anspruch 1, **dadurch gekennzeichnet, daß** zum Festhalten des Lotpulvers ein Haftmaterial (11, 12, 17; 27; 31, 37; 7; 53, 54, 55, 56, 57; 61, 62 ) verwendet wird, welches während des Herstellungsprozesses der metallischen Strukturen zwei in bezug auf seine Haftfähigkeit unterschiedliche Zustände, nämlich einen weniger und einen stärker haftfähigen, in Abhängigkeit von äußeren Bedingungen, insbesondere der Temperatur annehmen kann.

3. Verfahren nach Anspruch 1 oder 2,
**dadurch gekennzeichnet, daß** das Haftmaterial (11, 12, 17; 27; 31, 37; 47; 53, 54, 55, 56, 57; 61, 62 ) zwei Aggregatzustände, nämlich fest und flüssig, innerhalb eines während des Herstellungsprozesses vor dem eigentlichen Löten auftretenden zulässigen Temperaturbereiches annehmen kann.

4. Verfahren nach Anspruch 1, 2 oder 3,
**dadurch gekennzeichnet, daß** das Haftmaterial (11, 12, 17; 27; 31, 37; 47; 53, 54, 55, 56, 57; 61, 62 ) ein Wachs ist, welches bei Normaltemperatur von etwa 0 bis 50° C fest und bei höheren Temperaturen flüssig ist.

5. Verfahren nach Anspruch 1, 2 oder 3,
**dadurch gekennzeichnet, daß** das Haftmaterial (11, 12, 17; 27; 31, 37; 47; 53, 54, 55, 56, 57; 61, 62 ) ein Heißkleber ist, welcher bei Temperaturen unter seiner Schmelztemperatur, z. B. 200° C, keine oder nur geringe Hafteigenschaften an seiner Oberfläche hat, darüber jedoch starke Haftfähigkeit entfaltet.

6. Verfahren nach einem der vorhergehenden Ansprüche,
**dadurch gekennzeichnet, daß** das Verfahren auf die Herstellung von aus strukturierten Metallblechenlagen (1, 2) gewickelten, verschlungenen oder geschichteten Wabenkörpern (8), insbesondere für Abgaskatalysatoren von Kraftfahrzeugen, angewendet wird.

7. Verfahren nach Anspruch 6,
**dadurch gekennzeichnet, daß** das Haftmaterial (11, 12, 17; 27; 31, 37; 47; 53, 54, 55, 56, 57; 61, 62 ) in seinem haftfähigen, insbesondere flüssigen, Zustand an den gewünschten Stellen auf die Metallblechlagen (1, 2) aufgetragen wird.

8. Verfahren nach Anspruch 6 oder 7,
**dadurch gekennzeichnet, daß** die Metallblechlagen (1, 2) gewickelt, verschlungen oder geschichtet werden, während sich das Haftmaterial (11, 12, 17; 27; 31, 37; 47; 53, 54, 55, 56, 57; 61, 62 ) in seinem weniger haftfähigen, insbesondere festen Zustand, befindet.

9. Verfahren nach Anspruch 6, 7 oder 8,
**dadurch gekennzeichnet, daß** nach dem Wickeln, Verschlingen oder Schichten der Metallblechlagen (1, 2) das Haftmaterial (11, 12, 17; 27; 31, 37; 47; 53, 54, 55, 56, 57; 61, 62 ) in seinen haftfähigen, insbesondere flüssigen, Zustand versetzt und der Wabenkörper (8) vollständig oder in gewünschten Teilbereichen mit Lotpulver in Kontakt gebracht wird, welches an den mit dem Haftmaterial (11, 12, 17; 27; 31, 37; 47; 53, 54, 55, 56, 57; 61, 62 ) versehenen und mit Lotpulver beaufschlagten Stellen haften bleibt.

10. Verfahren nach Anspruch 6, 7, 8 oder 9,
**dadurch gekennzeichnet, daß** das Haftmaterial (11, 12, 17; 27; 31, 37; 47; 53, 54, 55, 56, 57; 61, 62 ) nach Beaufschlagung mit Lotpulver für Transportvorgänge zur Weiterbearbeitung wieder in den weniger hartfähigen, insbesondere festen, Zustand versetzt wird.

11. Verfahren nach einem der vorhergehenden Ansprüche,
**dadurch gekennzeichnet, daß** das Haftmaterial (11, 12, 17; 27; 31, 37; 47; 53, 54, 55, 56, 57; 61, 62 ) in seinem stärker haftfähigen, insbesondere flüssigen, Zustand eine so hohe Viskosität und Adhäsion zu den Metallstrukturen (1, 2) aufweist, daß es sich besonders in den Spalten und Zwickeln an Berührungsstellen (58) der Metallstrukturen (1, 2) ansammelt und dort Lötpulver binden kann.

12. Verfahren nach einem der vorhergehenden Ansprüche mit folgenden Schritten:
- mit einem Walzöl versehene Metallblechlagen (1, 2) werden durch Aufheizen thermisch entfettet;
- auf die noch heißen Metallblechlagen (1, 2) wird das Haftmaterial (11, 12, 17; 27; 31, 37; 47; 53, 54, 55, 56, 57; 61, 62 ) an dafür vorgesehenen Bereichen aufgetragen, insbesondere mittels mindestens eines Stiftes (31) aus im festen Zustand befindlichen Haftmaterial, welches bei Berührung mit den heißen Metallblechlagen (1, 2) dort einen flüssigen Auftrag (37) bildet;
- Abkühlen der Metallblechlagen (1, 2) bis zu einer Temperatur, bei der das Haftmaterial (11, 12, 17; 27; 31, 37; 47; 53, 54, 55, 56, 57; 61, 62 ) weniger haftfähig, insbesondere fest, ist;
- Wickeln, Verschlingen oder Schichten der Metallblechlagen (1, 2) zu einem Wabenkörper (8);
- Wiederaufheizen des Wabenkörpers (8) bis zu einer Temperatur, bei der das Haftmittel (11, 12, 17; 27; 31, 37; 47; 53, 54, 55, 56, 57; 61, 62 ) stärker haftfähig, insbesondere flüssig, ist, wobei sich das Haftmittel (11, 12, 17; 27; 31, 37; 47; 53, 54, 55, 56, 57; 61, 62 ) insbesondere in den Spalten in der Nähe der zu verlötenden Berührungsstellen (58) ansammelt;
- Beaufschlagung des Wabenkörpers (8) oder von Teilbereichen des Wabenkörpers (8) mit Lotpulver, welches an den mit Hartmittel(11, 12, 17; 27; 31, 37; 47; 53, 54, 55, 56, 57; 61, 62 ) versehenen Stellen haften bleibt.

13. Verfahren nach einem der Ansprüche 1 bis 11 mit folgenden Schritten:
- auf mit einem Walzöl versehene Metallblechlagen (1, 2) wird das Haftmaterial (11, 12, 17; 27; 31, 37; 47; 53, 54, 55, 56, 57; 61, 62 ) an dafür vorgesehenen Bereichen aufgetragen, insbesondere ein im flüssigen Zustand befindlicher Heißkleber, welches bei Berührung mit den Metallblechlagen (1, 2) dort einen festen Auftrag (37) bildet;
- Wickeln, Verschlingen oder Schichten der Metallblechlagen (1, 2) zu einem Wabenkörper (8);
- die Metallblechlagen (1, 2) des Wabenkörpers werden durch Aufheizen thermisch entfettet, wobei das Haftmittel (11, 12, 17; 27; 31, 37; 47; 53, 54, 55, 56, 57; 61, 62 ) aber nicht entfernt wird;
- bei einer Temperatur, bei der das Haftmittel (11, 12, 17; 27; 31, 37; 47; 53, 54, 55, 56, 57; 61, 62 ) noch stärker haftfähig, insbesondere flüssig, ist, wobei sich das Haftmittel (11, 12, 17; 27; 31, 37; 47; 53, 54, 55, 56, 57; 61, 62 ) insbesondere in den Spalten in der Nähe der zu verlötenden Berührungsstellen (58) ansammelt, Beaufschlagung des Wabenkörpers (8) oder von Teilbereichen des Wabenkörpers (8) mit Lotpulver, welches an den mit Haftmittel (11, 12, 17; 27; 31, 37; 47; 53, 54, 55, 56, 57; 61, 62 ) versehenen Stellen haften bleibt.

14. Verfahren nach Anspruch 12 oder 13,
**dadurch gekennzeichnet, daß** der belotete Wabenkörper (8) wieder auf eine Temperatur, bei der das Haftmittel (11, 12, 17; 27; 31, 37; 47; 53, 54, 55, 56, 57; 61, 62 ) fest wird, abgekühlt wird und weitere Handhabungs und Transportschritte bei dieser niedrigeren Temperatur erfolgen.

15. Verfahren nach Anspruch 12, 13 oder 14,
**dadurch gekennzeichnet, daß** der belotete Wabenkörper (8) in einem Lötofen hartgelötet, insbesondere hochtemperatur-vakuumgelötet, wird, wobei das Haftmaterial (11, 12, 17; 27; 31, 37; 47; 53, 54, 55, 56, 57; 61, 62 ) im wesentlichen rückstandsfrei verdampft.

16. Verfahren nach einem der Ansprüche 1 bis 8,
**dadurch gekennzeichnet, daß** nach dem Wickeln, Verschlingen oder Schichten der Metallblechlagen (1, 2) der Wabenkörper (8) vollständig oder in gewünschten Teilbereichen mit heißem Lotpulver beaufschlagt wird, welches bei Berührung mit dem Haftmaterial (11, 12, 17; 27; 31, 37; 47; 53, 54, 55, 56, 57; 61, 62) dieses kurzzeitig in seinen haftfähigen Zustand versetzt und daran haften bleibt.

17. Verfahren nach Anspruch 1, **dadurch gekennzeichnet,**
**daß** das Haftmaterial (11, 12, 17; 27; 31, 37; 47; 53, 54, 55, 56, 57; 61, 62) drei Zustände aufweist, nämlich einen ersten zum Auftragen geeigneten, einen zweiten nicht oder schwach klebenden während des Wickelns, Verschlingens oder Schichtens und einen dritten haftfähigen bei der Beaufschlagung mit Lotpulver.

## Claims

1. A process for brazing metallic structures (1,2), in particular honeycomb bodies (8) for exhaust gas catalytic converters, wherein the brazing material is applied in the form of powder and is held fast to the metallic structure by an adhesive material acting as an adhesive, binder or bonding agent **characterised in that** for holding the brazing powder fast an adhesive material (11, 12, 17; 27; 31, 37; 47; 53, 54, 55, 56, 57; 61, 62) is applied, which then during a part of the production process of the metallic structures has no or only a low level of adhesive capability but thereafter at times can be activated as an adhesive material.

2. A process according to claim 1 **characterised in that** for holding the brazing powder fast use is made of an adhesive material (11, 12, 17; 27; 31, 37; 47; 53, 54, 55, 56, 57; 61, 62) which during the production process of the metal structures can assume two conditions which are different in relation to its adhesive capability, namely a less adhesive condition and a more strongly adhesive condition, in dependence on external conditions, in particular temperature.

3. A process according to claim 1 or claim 2 **characterised in that** the adhesive material (11, 12, 17; 27; 31, 37; 47; 53, 54, 55, 56, 57; 61, 62) can assume two aggregate conditions, namely solid and liquid, within an admissible temperature range which occurs during the production process prior to the actual brazing operation.

4. A process according to claim 1, claim 2 or claim 3 **characterised in that** the adhesive material (11, 12, 17; 27; 31, 37; 47; 53, 54, 55, 56, 57; 61, 62) is a wax which is solid at normal temperature of about 0 to 50°C and liquid at higher temperatures.

5. A process according to claim 1, claim 2 or claim 3 **characterised in that** the adhesive material (11, 12, 17; 27; 31, 37; 47; 53, 54, 55, 56, 57; 61, 62) is a hot melt adhesive which at temperatures below its melting temperature, for example 200°C, has no or only low adhesion properties at its surface, but deploys a strong degree of adhesion capability thereabove.

6. A process according to one of the preceding claims **characterised in that** the process is applied to the production of honeycomb bodies (8) which are wound, twisted or layered from structured metal sheet layers (1, 2), in particular for exhaust gas catalytic converters of motor vehicles.

7. A process according to claim 6 **characterised in that** the adhesive material (11, 12, 17; 27; 31, 37; 47; 53, 54, 55, 56, 57; 61, 62) is applied to the metal sheet layers (1, 2) at the desired locations in its adhesive and in particular liquid condition.

8. A process according to claim 6 or claim 7 **characterised in that** the metal sheet layers (1, 2) are wound, twisted or layered while the adhesive material (11, 12, 17; 27; 31, 37; 47; 53, 54, 55, 56, 57; 61, 62) is in its less adhesive and in particular solid condition.

9. A process according to claim 6, claim 7 or claim 8 **characterised in that** after the operation of winding, twisting or layering the metal sheet layers (1, 2) the adhesive material (11, 12, 17; 27; 31, 37; 47; 53, 54, 55, 56, 57; 61, 62) is put into its adhesive, in particular liquid condition and the honeycomb body (8) is brought entirely or in desired regions thereof into contact with brazing powder which remains adhering to the locations which are provided with the adhesive material (11, 12, 17; 27; 31, 37; 47; 53, 54, 55, 56, 57; 61, 62) and which are acted upon by brazing powder.

10. A process according to claim 6, claim 7, claim 8 or claim 9 **characterised in that** the adhesive material (11, 12, 17; 27; 31, 37; 47; 53, 54, 55, 56, 57; 61, 62), after being subjected to the action of brazing powder for transport operations, for further processing is put back into the less adhesive and in particular solid condition.

11. A process according to one of the preceding claims **characterised in that** the adhesive material (11, 12, 17; 27; 31, 37; 47; 53, 54, 55, 56, 57; 61, 62) in its more strongly adhesive, in particular liquid condition has such a high level of viscosity and adhesion in relation to the metal structures (1, 2) that it collects in particular in the gaps and wedge-shaped recesses at contact locations (58) of the metal structures (1, 2) and can bind brazing powder there.

12. A process according to one of the preceding claims comprising the following steps:
- metal sheet layers (1, 2) provided with a rolling oil are thermally degreased by heating;
- the adhesive material (11, 12, 17; 27; 31, 37; 47; 53, 54, 55, 56, 57; 61, 62) is applied to the metal sheet layers (1, 2) while still hot at regions intended for that purpose, in particular by means of at least one block (31) of adhesive material which is in the solid condition and which upon coming into contact with the hot metal sheet layers (1, 2) there forms a liquid application (37);
- cooling the metal sheet layers (1, 2) to a temperature at which the adhesive material (11, 12, 17; 27; 31, 37; 47; 53, 54, 55, 56, 57; 61, 62) is less adhesive and in particular solid;
- winding, twisting or layering the metal sheet layers (1, 2) to form a honeycomb body (8);
- again heating the honeycomb body (8) to a temperature at which the adhesive material (11, 12, 17; 27; 31, 37; 47; 53, 54, 55, 56, 57; 61, 62) is more strongly adhesive and in particular liquid, wherein the adhesive material (11, 12, 17; 27; 31, 37; 47; 53, 54, 55, 56, 57; 61, 62) collects in particular in the gaps in the proximity of the contact locations (58) to be brazed; and
- subjecting the honeycomb body (8) or regions thereof to brazing powder which remains adhering to the locations provided with adhesive material (11, 12, 17; 27; 31, 37; 47; 53, 54, 55, 56, 57; 61, 62).

13. A process according to one of claims 1 to 11 with the following steps:
- the adhesive material (11, 12, 17; 27; 31, 37; 47; 53, 54, 55, 56, 57; 61, 62) is applied to the metal sheet layers (1, 2) provided with a rolling oil at regions intended for same, in particular a hot melt adhesive which is in the liquid condition and which upon coming into contact with the metal sheet layers (1, 2) forms a solid application (37) there;
- winding, twisting or layering the metal sheet layers (1, 2) to form a honeycomb body (8);
- the metal sheet layers (1, 2) of the honeycomb body are thermally degreased by heating, in which step however the adhesive material (11, 12, 17; 27; 31, 37; 47; 53, 54, 55, 56, 57; 61, 62) is not removed;
- at a temperature at which the adhesive material (11, 12, 17; 27; 31, 37; 47; 53, 54, 55, 56, 57; 61, 62) is still more strongly adhesive and in particular is liquid, wherein the adhesive material (11, 12, 17; 27; 31, 37; 47; 53, 54, 55, 56, 57; 61, 62) accumulates in particular in the gaps in the vicinity of the contact locations (58) to be brazed, subjecting the honeycomb body (8) or regions of the honeycomb body (8) to the action of brazing powder which remains adhering to the locations provided with adhesive material (11, 12, 17; 27; 31, 37; 47; 53, 54, 55, 56, 57; 61, 62).

14. A process according to claim 12 or claim 13 **characterised in that** the brazed honeycomb body (8) is cooled again to a temperature at which the adhesive material (11, 12, 17; 27; 31, 37; 47; 53, 54, 55, 56, 57; 61, 62) becomes solid and further handling and transport steps are effected at that lower temperature.

15. A process according to claim 12, claim 13 or claim 14 **characterised in that** the brazed honeycomb body (8) is brazed in a brazing furnace, in particular is subjected to high-temperature vacuum brazing, wherein the adhesive material (11, 12, 17; 27; 31, 37; 47; 53, 54, 55, 56, 57; 61, 62) evaporates in a substantially residue-free manner.

16. A process according to one of claims 1 to 8 **characterised in that** after the operation of winding, twisting or layering the metal sheet layers (1, 2) the honeycomb body (8) is acted upon completely or in desired portions thereof with hot brazing powder which upon coming into contact with the adhesive material (11, 12, 17; 27; 31, 37; 47; 53, 54, 55, 56, 57; 61, 62) briefly puts it into its adhesive condition and remains adhering thereto.

17. A process according to claim 1 **characterised in that** the adhesive material (11, 12, 17; 27; 31, 37; 47; 53, 54, 55, 56, 57; 61, 62) has three conditions, namely a first condition which is suitable for application thereof, a second condition which is not adhesive or only slightly adhesive during the winding, twisting or layering operation, and a third adhesive condition upon being subjected to the action of brazing powder.

## Revendications

1. Procédé de brasage de structures métalliques (1, 2), notamment de corps en nids d'abeilles (8), pour des catalyseurs de gaz d'échappement, dans quel cas le matériau de brasure est rapporté comme poudre et est retenu sur la structure métallique par un matériau adhésif agissant en tant que colle, liant ou agent d'adhésion, **caractérisé en ce que** pour retenir la poudre à braser un matériau adhésif (11, 12, 17 ; 27 ; 31 , 37 ; 47 ; 53, 54, 55, 56, 57 ; 61, 62) est appliqué qui alors durant une partie du processus de fabrication des structures métalliques n'a pas d'adhésivité ou uniquement une adhésivité faible, mais qui ensuite peut être activé temporairement comme matériau adhésif.

2. Procédé selon la revendication 1, **caractérisé en ce que** pour retenir la poudre à braser un matériau adhésif (11, 12, 17 ; 27 ; 31 , 37 ; 47 ; 53, 54, 55, 56, 57 ; 61, 62) est utilisé qui lors du processus de fabrication des structures métalliques peut quant à son adhésivité adopter deux états différents, à savoir un état d'adhésivité moins fort et un état d'adhésivité plus fort, en fonction de conditions extérieures, notamment de la température.

3. Procédé selon la revendication 1 ou 2, **caractérisé en ce que** le matériau adhésif (11, 12, 17 ; 27 ; 31 , 37 ; 47 ; 53, 54, 55, 56, 57 ; 61, 62) peut adopter deux états d'agrégation, à savoir solide et liquide, à l'intérieur d'un écart de températures admissible se manifestant lors du processus de fabrication avant le brasage proprement dit.

4. Procédé selon la revendication 1, 2 ou 3, **caractérisé en ce que** le matériau adhésif (11, 12, 17 ; 27 ; 31 , 37 ; 47 ; 53, 54, 55, 56, 57 ; 61, 62) est une cire qui à température normale d'environ 0 à 50°C est solide et qui à des températures plus élevées est liquide.

5. Procédé selon la revendication 1, 2 ou 3, **caractérisé en ce que** le matériau adhésif (11, 12, 17 ; 27 ; 31 , 37 ; 47 ; 53, 54, 55, 56, 57 ; 61, 62) est une colle à chaud qui à des températures en dessous de sa température de fusion, par exemple 200°C, n'a pas de ou uniquement des propriétés faibles d'adhésion à sa surface, mais qui développe une forte adhésivité au-delà de cette température.

6. Procédé selon l'une des revendications précédentes, **caractérisé en ce que** le procédé est utilisé pour la fabrication de corps en nids d'abeilles (8) enroulés, entre-enroulés ou empilés de couches de tôles métalliques structurées (1, 2), notamment pour des catalyseurs de gaz d'échappement de véhicules automobiles.

7. Procédé selon la revendication 6, **caractérisé en ce que** le matériau adhésif (11, 12, 17 ; 27 ; 31 , 37 ; 47 ; 53, 54, 55, 56, 57 ; 61, 62) est appliqué dans son état d'adhésivité, notamment dans son état liquide, aux endroits désirés sur les couches de tôles métalliques (1, 2).

8. Procédé selon la revendication 6 ou 7, **caractérisé en ce que** les couches de tôles métalliques (1, 2) sont enroulées, entre-enroulées ou empilées pendant que le matériau adhésif (11, 12, 17 ; 27 ; 31 , 37 ; 47 ; 53, 54, 55, 56, 57 ; 61, 62) se trouve dans sont état moins adhésif, notamment dans son état solide.

9. Procédé selon la revendication 6, 7 ou 8, **caractérisé en ce qu'**après l'enroulement, l'entre-enroulement ou l'empilage des couches de tôles métalliques (1, 2) le matériau adhésif (11, 12, 17 ; 27 ; 31 , 37 ; 47 ; 53, 54, 55, 56, 57 ; 61, 62) est mis dans son état adhésif, notamment liquide et que le corps en nids d'abeilles (8) est mis complètement ou dans des zones partielles désirées en contact avec de la poudre à braser, qui reste adhérée aux endroits pourvus de matériau adhésif (11, 12, 17 ; 27 ; 31 , 37 ; 47 ; 53, 54, 55, 56, 57 ; 61, 62) et chargés de poudre à braser.

10. Procédé selon la revendication 6, 7, 8 ou 9, **caractérisé en ce qu'**après avoir été chargé de poudre à braser pour des opérations de transport, pour le traitement ultérieur le matériau adhésif (11, 12, 17 ; 27 ; 31 , 37 ; 47 ; 53, 54, 55, 56, 57 ; 61, 62) est ramené à nouveau dans l'état moins adhésif, notamment dans l'état solide.

11. Procédé selon l'une des revendications précédentes, **caractérisé en ce que** dans son état plus fortement adhésif, notamment dans son état liquide le matériau adhésif (11, 12, 17 ; 27 ; 31 , 37 ; 47 ; 53, 54, 55, 56, 57 ; 61, 62) a une viscosité et une adhésion par rapport aux structures métalliques (1, 2) tellement élevée qu'il s'accumule surtout dans les fentes et les coins à des endroits de contact (58) des structures métalliques et peut y lier de la poudre à braser.

12. Procédé selon l'une des revendications précédentes avec les étapes suivantes :
- des couches de tôles métalliques (1, 2) pourvues d'une huile de laminage sont dégraissées thermiquement par chauffage ;
- sur les couches de tôles métalliques (1, 2) encore chaudes le matériau adhésif (11, 12, 17 ; 27 ; 31 , 37 ; 47 ; 53, 54, 55, 56, 57 ; 61, 62) est appliqué sur des zones prévues à cet effet, notamment à l'aide d'au moins un bloc (31) de matériau adhésif se trouvant en état solide, qui au contact des couches de tôles métalliques (1, 2) chaudes y forme une application (37) liquide ;
- refroidissement des couches de tôles métalliques (1, 2) jusqu'à une température à laquelle le matériau adhésif (11, 12, 17 ; 27 ; 31 , 37 ; 47 ; 53, 54, 55, 56, 57; 61, 62) est moins adhésif, notamment solide ;
- enroulement, entre-enroulement ou empilage des couches de tôles métalliques (1, 2) en un corps en nids d'abeilles (8) ;
- nouveau chauffage du corps en nids d'abeilles (8) jusqu'à une température à laquelle le matériau adhésif (11, 12, 17 ; 27 ; 31 , 37 ; 47 ; 53, 54, 55, 56, 57 ; 61, 62) est plus fortement adhésif, notamment liquide, le matériau adhésif (11, 12, 17 ; 27 ; 31 , 37 ; 47 ; 53, 54, 55, 56, 57 ; 61, 62) s'accumulant notamment dans les fentes à proximité des endroits de contact (58) devant être brasés ;
- chargement du corps en nids d'abeilles (8) ou de zones partielles du corps en nids d'abeilles (8) avec de la poudre à braser qui reste adhérée aux endroits pourvus de matériau adhésif (11, 12, 17 ; 27 ; 31 , 37 ; 47 ; 53, 54, 55, 56, 57 ; 61, 62).

13. Procédé selon l'une des revendications 1 à 11 avec les étapes suivantes :
- sur des couches de tôles métalliques (1, 2), pourvues d'une huile de laminage, le matériau adhésif (11, 12, 17 ; 27 ; 31 , 37 ; 47 ; 53, 54, 55, 56, 57 ; 61, 62) est appliqué dans des zones prévues à cet effet, notamment une colle à chaud se trouvant en état liquide, qui au contact des couches de tôles métalliques (1, 2) y forme une application solide (37) ;
- enroulement, entre-enroulement ou empilage des couches de tôles métalliques (1, 2) en un corps en nids d'abeilles (8) ;
- les couches de tôles métalliques (1, 2) du corps en nids d'abeilles sont dégraissées thermiquement par chauffage, le matériau adhésif (11, 12, 17 ; 27 ; 31 , 37 ; 47 ; 53, 54, 55, 56, 57 ; 61, 62) n'étant cependant pas éliminé ;
- à une température, à laquelle le matériau adhésif (11, 12, 17 ; 27 ; 31 , 37 ; 47 ; 53, 54, 55, 56, 57 ; 61, 62) est encore plus adhésif, notamment liquide, le matériau adhésif (11, 12, 17 ; 27 ; 31 , 37 ; 47 ; 53, 54, 55, 56, 57 ; 61, 62) s'accumulant notamment dans les fentes à proximité des endroits de contact (58) devant être brasés, chargement du corps en nids d'abeilles (8) ou de zones partielles du corps en nids d'abeilles (8) avec de la poudre à braser, qui reste adhérée aux endroits pourvus de matériau adhésif (11, 12, 17 ; 27 ; 31 , 37 ; 47 ; 53, 54, 55, 56, 57 ; 61, 62).

14. Procédé selon la revendication 12 ou 13, **caractérisé en ce que** le corps en nids d'abeilles (8) garni de matériau de brasure est à nouveau refroidi à une température, à laquelle le matériau adhésif (11, 12, 17 ; 27 ; 31 , 37 ; 47 ; 53, 54, 55, 56, 57 ; 61, 62) devient solide et que d'autres étapes d'application et de transport sont effectuées à cette température plus basse.

15. Procédé selon la revendication 12, 13 ou 14, **caractérisé en ce que** le corps en nids d'abeilles (8) garni de matériau de brasure est soumis à un brasage fort dans un four de brasage, notamment à un brasage fort sous vide à hautes températures, le matériau adhésif (11, 12, 17 ; 27 ; 31 , 37 ; 47 ; 53, 54, 55, 56, 57 ; 61, 62) s'évaporant sensiblement sans résidus.

16. Procédé selon l'une des revendications 1 à 8, **caractérisé en ce qu'**après l'enroulement, l'entre-enlacement ou l'empilage des couches de tôles métalliques (1, 2) le corps en nids d'abeilles (8) est chargé complètement ou dans des zones partielles désirées avec de la poudre à braser chaude, qui au contact du matériau adhésif (11, 12, 17 ; 27 ; 31 , 37 ; 47 ; 53, 54, 55, 56, 57 ; 61, 62) met celui-ci brièvement dans son état adhésif et y reste adhérée.

17. Procédé selon la revendication 1, **caractérisé en ce que** le matériau adhésif (11, 12, 17 ; 27 ; 31 , 37 ; 47 ; 53, 54, 55, 56, 57 ; 61, 62) a trois états, à savoir un premier approprié à l'application, un deuxième qui n'est pas ou uniquement faiblement adhésif et un troisième état adhésif lors du chargement avec de la poudre à braser.
